Europäisches Patentamt

European Patent Office

Office européen des brevets

(11) Publication number: **0 194 729**
**B1**

## EUROPEAN PATENT SPECIFICATION

(45) Date of publication of patent specification: **20.12.89**

(21) Application number: **86200390.2**

(22) Date of filing: **11.03.86**

(60) Divisional application 88120243.6 filed on 11/03/86.

(51) Int. Cl.⁴: **A 01 J 7/00, A 01 K 1/12**

(54) Implement for milking animals.

(30) Priority: **12.03.85 NL 8500694**
**12.03.85 NL 8500693**

(43) Date of publication of application:
**17.09.86 Bulletin 86/38**

(45) Publication of the grant of the patent:
**20.12.89 Bulletin 89/51**

(84) Designated Contracting States:
**AT CH DE FR GB IT LI NL SE**

(56) References cited:
**US-A-3 763 828**
**US-A-4 010 714**

**DE TELEGRAAF, 4th December 1984, page T23;
E. BOS: "Land- en tuinbouw"**

(73) Proprietor: **C. van der Lely N.V.
Weverskade 10 P.O. Box 26
NL-3155 ZG Maasland (NL)**

(72) Inventor: **Van der Lely, Cornelis
7 Brüschenrain
Zug (CH)**

(74) Representative: **Mulder, Herman et al
Octrooibureau Van der Lely N.V. Weverskade 10
P.O. Box 26
NL-3155 ZG Maasland (NL)**

## Description

The invention relates to an implement for milking animals, such as cows, comprising at least one milking parlour and at least one milking machine with a milking cluster, which milking parlour includes upwardly and longitudinally directed displacement means for forcing the animal to move at least one hind leg in the lateral direction..

Especially with an increasing automation of the milking procedure it is not only of importance to bring the animal in a desired place, but it is also important to adjust the animal to an appropriate posture, a proper accessibility of the udder and a predetermined location of the udder being desired. By laterally moving one or both hind legs of the animal the animal can be adjusted to a posture with slightly spread hind legs, which can considerably increase the accessibility of the udder. In addition, because of its spread hind legs the animal is more stable, whilst moving the hind legs is made difficult for the animal, so that it is difficult for the animal to change its posture.

In US-A-4 010 714 an implement for milking animals, as described in the opening paragraph. is described, wherein the displacement means is carried out as a box-form which is capable of rising up on the milking parlour floor through an opening therein. Through the displacement means a milking cluster can be moved upwardly. This implement is rather complicated and requires a relatively large space under the parlour floor.

The invention has for its object to provide an implement for milking animals, such as cows, in which an effective positioning of the animal is effected at a relatively simple way and in which the milking procedure can be performed efficiently.

To that end, according to the invention, the displacement means is fixed to a laterally movable portion of the milking parlour floor. In accordance with a further characteristic of the invention the displacement means comprises at least one guide plate, which is laterally movable in opposite directions for forcing the animal to move at least one hind leg in lateral direction. In a specific embodiment of the invention the parlour floor has two laterally movable parlour floor portions, on each of which a guide plate is fixed, which parlour floor portions can move away from each other in lateral direction, whereby, when each of the hind legs of the animal is positioned on a laterally movable parlour floor portion, the hind legs are forced to move away from each other in lateral direction.

In accordance with a characteristic of the invention upwardly hinging flaps are provided, which are connected to the laterally movable parlour floor portions and which each constitute a stop for one of the hind legs. The presence of the flaps may prevent the animal from moving the relevant leg in an unwanted direction. The flaps can be swivelled to a predominantly horizontal position, so that a substantially continuous floor of the milking parlour is obtained when the animal enters the milking parlour. Preferably the parlour floor has a further upwardly hinging flap before the animal's fore legs.

In accordance with a characteristic of the invention the milking parlour includes one or a plurality of sensors, which are arranged such that it can be detected whether legs of the animal are in a predetermined position. In accordance with a further characteristic of the invention the sensors are provided on either side of the displacement means. Preferably the sensors are provided on the laterally movable parlour floor portions. Thus, the reliability of the implement can be increased, as the presence of the animal's legs in a certain position is an adequate indication that the animal is in the proper posture.

In accordance with a characteristic of the invention the guide plates, moved away from each other in the lateral direction, form a space, through which the milking cluster can be applied to the udder of the animal. In accordance with a further characteristic of the invention the milking cluster may be swivable around a substantially horizontal axis provided near the posterior of the animal, so that the milking cluster can swivel through the abovementioned space to under the animal, more specifically passing between the hind legs. The hinge means for swivelling the milking cluster may be provided at both sides of the animal, so that a substantially U-shaped frame is obtained to which the milking cluster is connected and which is suspended capable of hinging by its ends.

Preferably, the milking procedure proceeds automatically. For this purpose a computer can be used which is programmed such that all control operations proceed automatically.

If an animal, such as a cow, is to be milked, it passes through the entrance door at the rear end of the milking parlour. As soon as the cow is in the milking parlour the door is automatically closed. The cow is then stationed with one hind leg at one side of a raised portion in the centre of the milking parlour and the other hind leg at the other side of the raised portion in the centre of the milking parlour.

A flap extending approximately horizontally in the milking parlour floor is moved hydraulically, so that the flap is then in an upward direction. As a result thereof, the cow can not advance its hind leg and thus disturb the milking procedure with the hind leg.

The central raised portion is formed by two parts. One part is hydraulically movable to the left, the other part is hydraulically movable to the right. When these parts are moved, the hind legs of the cow are also moved in the lateral direction.

Because of this forced, lateral movement of the hind legs it is inter alia achieved that the animal can not stand on one hind leg and consequently the centre of the animal is positioned in the centre of the milking parlour, and that a space is created through which the milking cluster can advan-

tageously be connected to the animal's udder from its rear.

As soon as the cow has been milked, the milking cluster moves in the rearward and upward direction to such a height that another animal can pass under it. The raised portion at the hind legs moves back to the centre again. The flaps which were moved to in front of the animal's legs move back again to an approximately horizontal position.

The exit door at the front of the milking parlour opens. The animal leaves the milking parlour and when the entrance door of the milking parlour opens another cow can enter again and be milked automatically.

During milking the cover device bears on the stop against the wall. As soon as the cow has been milked, the milking cluster is moved to the rear until the milking cluster is under the cover device. Then a second stop fastened to the arm of the milking cluster bears against the arm of the cover device and thus the milking cluster together with the cover device on top of it are moved to the rear in a safe manner, without it being possible for the milking cluster to be fouled. This is of particular interest when the milking cluster must be passed through the hind legs of the animal, for example a cow, for connection to the animal's udder.

Part of the subject matter disclosed in the present application forms the basis of a divisional application.

For a detailed description of the invention, an embodiment of the implement for milking animals will now be described, by way of example. with reference to the accompanying drawings.

Figure 1 is a top view of an implement for milking animals.

Figure 2 is a cross-sectional view along the line II-II of Figure 1 of the implement, a cow being shown which has a milking cluster connected to the udder;

Figure 3 shows a part of Figure 2, containing further details;

Figure 4 is a view according to the arrow IV in Figure 1;

Figure 5 is a view of the implement corresponding to Figure 4;

Figure 6 shows a further detail of the implement, the milking cluster being connected to the udder;

Figure 7 is an elevational view along the line VII-VII in Figure 6;

Figure 8 shows a detail corresponding to the line VIII-VIII in Figure 7, and

Figure 9 shows a detail corresponding to the line IX-IX in Figure 3.

In the different Figures, which illustrate the embodiment schematically, corresponding components are given the same reference numerals.

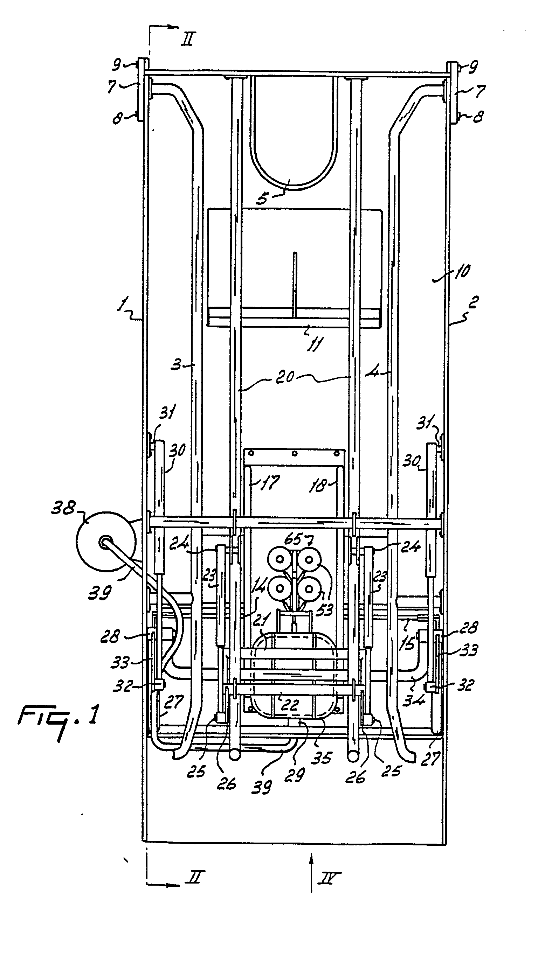

As is shown in Figure 1, the implement for milking animals has two side walls 1, 2, to which guide rods 3, 4 are connected, between which an animal for example a cow. may be present. At its front end the milking parlour has a manger 5, in which fodder, for example concentrated fodder can be fed in doses with the aid of means, not further shown.

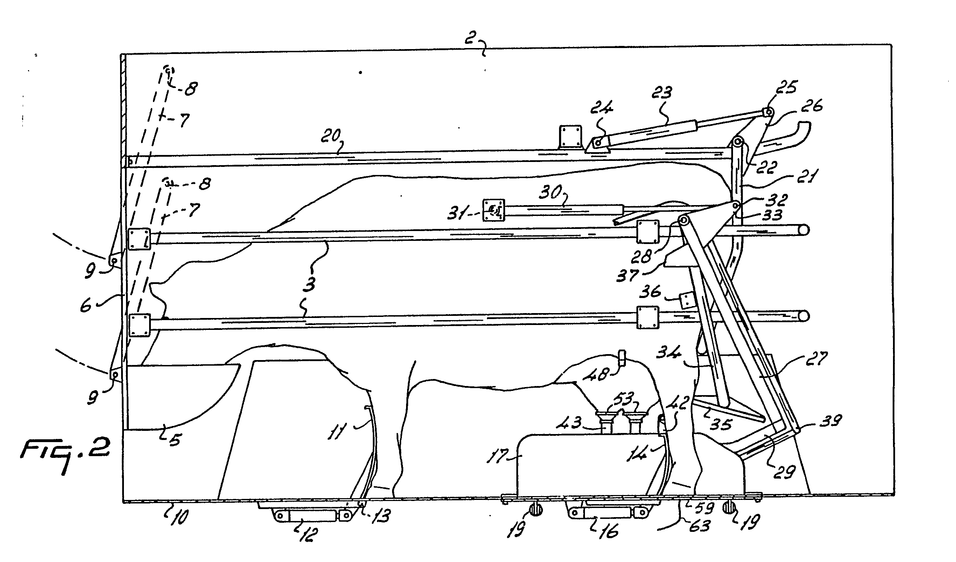

As will be apparent from Figure 2, the manger 5 is connected to an exit door 6 which can be moved by means of swivel arms 7 to such a position that an animal which leaves the milking parlour can pass under it. To that end, the swivel arms 7 are fitted at one end to the side walls 1, 2 by means of hinges 8, whilst the other ends of the swivel arms 7 are fitted to the entrance door 6 by means of hinges 9. Using drive means. not further shown. the exit door 6 can be opened and closed automatically or manually, as the case may be.

Near the place where the animal's fore legs may be positioned, the milking parlour floor 10 is provided with a flap 11, which in Figure 1 and Figure 2 is shown in its upward position. By means of the hydraulic or pneumatic cylinder 12 the flap 11 can be rotated around the substantially horizontal hinge pin 13. As a result thereof the flap 11 can be adjusted to a substantially horizontal position, the flap 11 then being at least partly flush with the floor, whilst in the upwardly directed position, as shown in Figures 1 and 2, the flap may constitute a stop against which the fore legs of the animal present in the milking parlour bear, as is shown in Figure 2.

Near the position where the hind legs of the animals may be, the floor of the milking parlour has two flaps 14, 15 which each constitute a stop for one of the hind legs. Also these flaps 14, 15 are movable by means of hydraulic or pneumatic cylinders 16 from a substantially horizontal position, the flaps then being, at least partly flush with the floor 10, to a substantially vertical position, as is shown in the Figures 1 and 2.

In addition. near the place where the animal's hind legs may be positioned, the milking parlour may have two guide plates 17, 18 which extend in the upward direction and in the longitudinal direction of the milking parlour. By means of hydraulic or pneumatic cylinders 19 the two guide plates 17, 18 can be moved from a central position, in which the guide plates are at a short distance from each other, to a position in which they are remote from each other, which position is shown in Figures 1 and 2.

As will be described in greater detail hereinafter, the flaps 14 and 15 are provided in milking parlour floor portions which together with the adjacent guide plates 17 and 18, can move away from each other in the lateral direction, e.g. for approximately 20 cms, so that the hind legs of an animal present in the milking parlour are moved apart. Each of the hind legs of the animal is positioned on a laterally movable portion of the floor.

When the guide plates 17, 18 have been moved away from each other in the lateral direction, so that the situation shown in Figures 1 and 2 has been obtained. the milking cluster 65 can be applied from the space between the two guide plates 17, 18, as will be described in greater detail in the sequel.

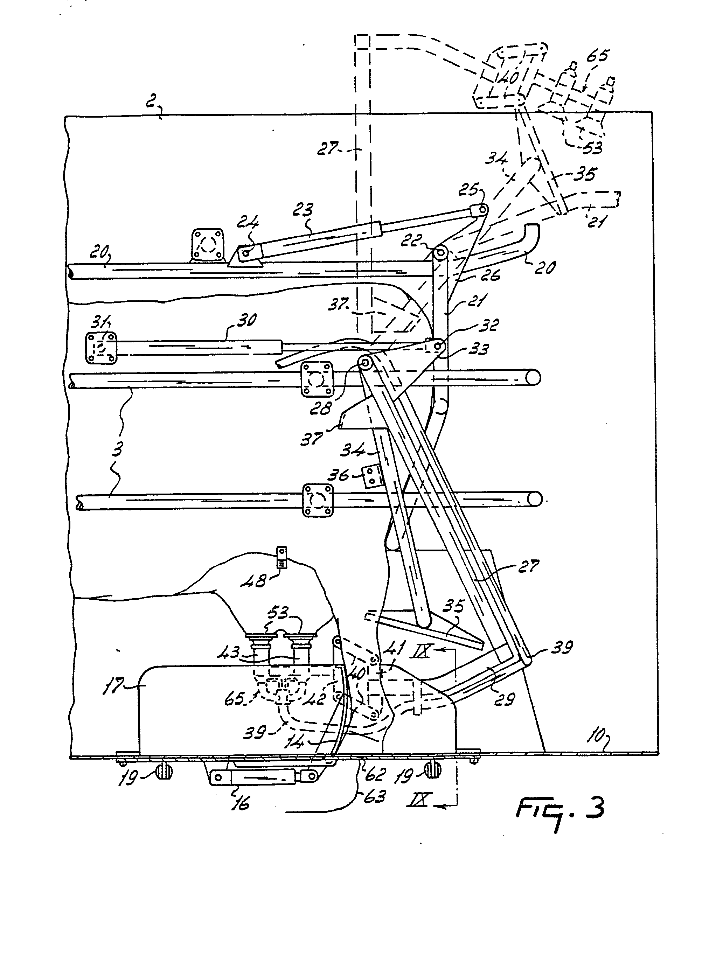

The implement furthermore comprises guide rods 20, which substantially extend over the animal in the milking parlour. These guide rods 20 may prevent the animal from making such movements that it steps over the flaps 11, 14 when in the vertical position. In addition, the guide rods 20 are provided with a mechanism which can bear against the posterior of the animal in the milking parlour. This mechanism is formed by a substantially U-shaped rod 21, which near its end is fastened by means of hinge pin 22 to the guide rods 20, this pin 22 extending substantially transversely of the milking parlour in the horizontal direction. The U-shaped rod 21 can be moved by means of the hydraulic or pneumatic cylinder 23, one end 24 of which is connected capable of hinging to a guide rod 20, whilst the other end is connected by means of hinge point 25 to a lever 26 fitted to the U-shaped rod. By means of the operating cylinder 23 the U-shaped rod can be moved from a substantially vertical position, in which the U-shaped rod bears against the posterior of the animal in the milking parlour, to an upward position, as shown in Figure 3 by means of broken lines, it being possible for the animal, when it enters the milking parlour, to pass under the U-shaped rod 21. After the animal has arrived in the milking parlour the U-shaped rod 21 can be moved down and push with a predetermined force against the animal, so as to drive it forward to the desired location. It is alternatively possible to move the U-shaped rod to a predetermined position, depending on the animal, so that the relevant animal can be positioned in the desired forward position.

The means for applying the milking cluster 65 have a substantially U-shaped frame 27 whose end is fastened to the side walls 1, 2 of the milking parlour by means of hinge points 28. The U-shaped frame 27 incorporates a supporting arm 29 which carries the milking cluster 65. The U-shaped frame 27 together with the supporting arm 29 and the milking cluster fastened thereto is capable of swivelling around hinge points 28 from an operative position, as shown in Figure 1, 2 and 3, to an inoperative position which is shown in Figure 3 by means of broken lines. For that purpose a hydraulic or pneumatic operating cylinder 30 is provided which is fastened by means of hinge 31 to the side wall 1, 2 of the milking parlour and whose other end is fastened by means of hinge 32 to a lever 33 fitted on the U-shaped frame 27. As can be seen from Figure 1, two operating cylinders 30 are provided, one on either side of the milking parlour.

A second, substantially U-shaped frame 34 is provided, capable of free rotation, by means of the hinges 28. A cover member 35 which is substantially constituted by a plate-shaped portion is fastened to this U-shaped frame 34. When the milking cluster 65 together with its supports 27, 29 is in the operative position, as shown in Figure 3, the frame 34 bears against a stop 36 provided at the side wall 1, 2 of the milking parlour. In this position, the cover member 35 will be capable of catching any excrements of the animal. When the frame 27 is swivelled to its inoperative position by means of the operating cylinder 30, the milking cluster 65 will move towards the cover member 35, whereafter the frame 24 comes into contact with carrier member 37 connected to the U-shaped frame 27. As a result thereof, the frame 34 is lifted from the stop 36 and the moving frame 27 carries it in the upward direction, so that the position indicated in Figure 3 by means of broken lines is reached.

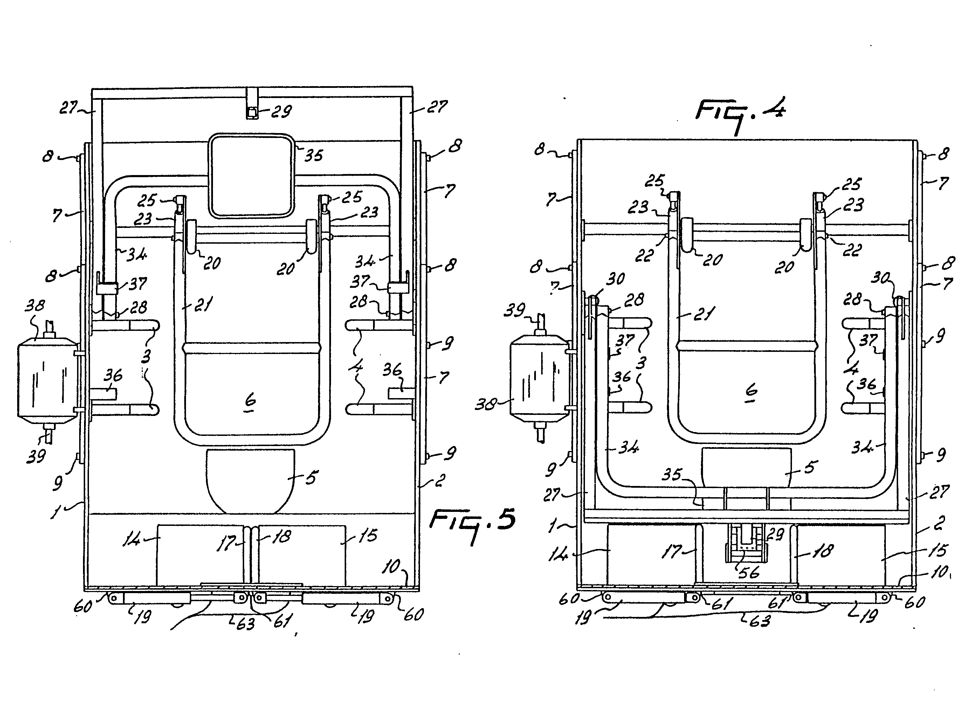

The Figures 4 and 5 schematically show a rear view of the implement. Both Figures show the substantially U-shaped rod 21 in its downward position. The milking cluster support and the cover member are shown in Figure 4 in the operative position and in the inoperative position in Figure 5. In addition, a milk container 38 is shown which is connected to the milking cluster through pipe 39.

Figure 5 shows the guide plates 17, 18 in the position in which they are at a short distance from each other. The guide plates 17, 18 can be moved apart to the position shown in Figure 4, by means of operating cylinders 19. As is illustrated by Figures 4 and 5. the flaps 14 and 15 which are shown in the vertical position move laterally together with the guide plates 17 and 18, respectively. Also the floor portion near the flaps 14 and 15 perform the same movements.

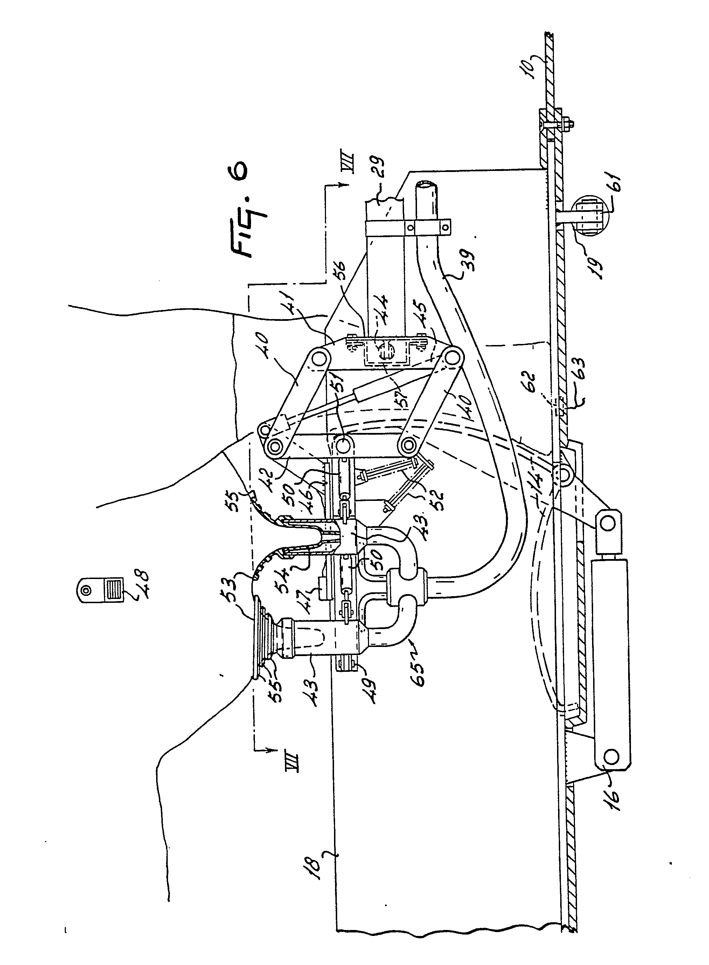

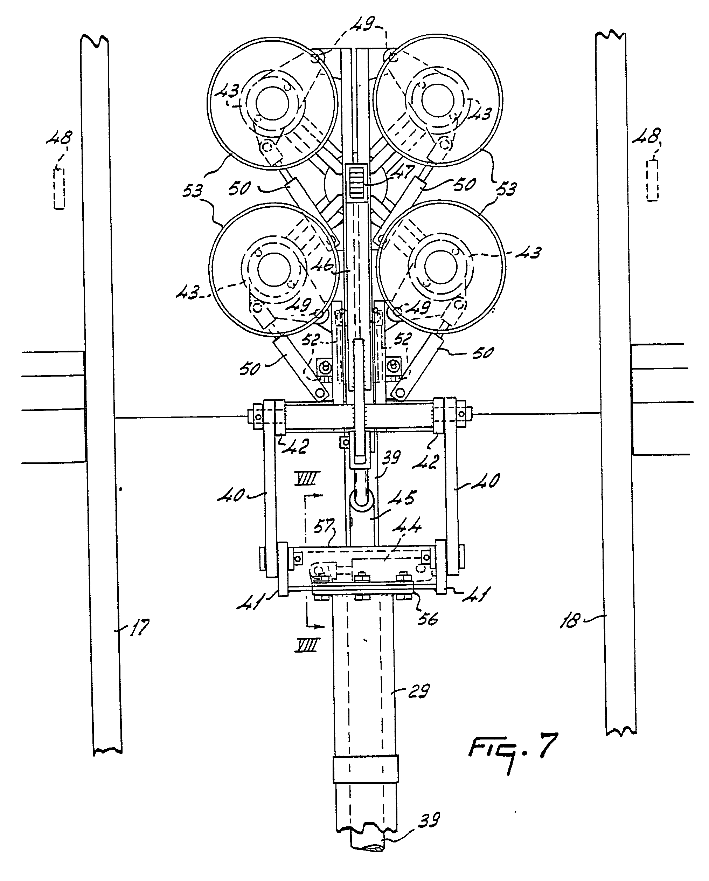

Figures 6 and 7 show the milking cluster 65 and the manner in which they are fastened to supporting arm 29 in greater detail. The milking cluster is fastened to the supporting arms 29 by means of a parallelogram construction which parallelogram construction has four connecting elements 40 which extend substantially in parallel with each other and are fastened capable of swivelling to a supporting element 41 which is slidably connected to supporting arm 29, and also to the support 42 for the teat cups 43. The support 42 of the teat cups 43 is laterally movable because supporting element 41 can perform a corresponding movement relative to the supporting arm 29. To this end, a hydraulic or pneumatic operating cylinder 44 is provided. one end of which is connected to the supporting element 41 and the other end to the supporting arm 29. The support 42 of the teat cups 43 is movable in the vertical direction by means of the parallelogram construction, which vertical movement can be controlled by operating cylinder 45, one end of which is connected capable of swivelling to the supporting member 41 and the other to the support 42, which support 42 is furthermore rigidly connected to an arm 46 at whose end a sensor or indicator 47 is provided. It will be clear that in the described manner the support 42 can be adjusted to any desired position, which position corresponds to the position of the sensor 47. In the embodiment shown the animal is provided with two orientation means 48 arranged on its skin. These orientation means 48 may comprise a small transmitter transmitting signals which are received by the sensor 47, so that the position of sensor 47 relative to the orientation means 48 can be recorded. Thus, the support 42 of the teat cups 43 can be controlled to a desired position relative to the animal present in the milking parlour, with the object of connecting the teat cups to the teats of the udder.

Relative to the support 42 each of the teat cups 43 is movable in a horizontal plane. To that end, each teat cup 43 can rotate around an associated vertical hinge pin 49. This swivelling motion is effected for each of the teat cups 43 by a pneumatic or hydraulic operating cylinder 50 associated with each of the teat cups 43. In addition to this feature of moving the support in a horizontal plane, each of the teat cups is spring-loaded in the vertical direction, as each of the teat cups 43 is arranged capable of swivelling around horizontal pin 51 to the support 42. To that end, each of the teat cups is provided with an arm which is swivable around hinge pin 51 and is supported by a helical spring 52. In the described manner, each of the teat cups 43 can move from a horizontal plane downwards by spring action, whilst in addition each of the teat cups can be adjusted in that horizontal plane to a desired position relative to the other teat cups.

Prior to applying the milking cluster 65, the teat cups 43 are brought to the appropriate position for the relevant animal. This position can be manually adjusted, it is however alternatively possible for the required data of the animal to be stored in a computer, so that the correct position of the teat cups can be automatically adjusted after the animal present in the milking parlour has been recognized by electronic means. Not only the relative position of the teats of the udder to each other, but also the position of the teats relative to the orientation means 48 may have been processed as data in a computer, so that the milking cluster, after the teat cups have been adjusted to the appropriate position, can be applied in the correct place relative to the udder in the upward direction, controlled by the computer.

So as to facilitate applying the teat cups 43, the teat cups 43 have funnel-shaped catching means 53 made of flexible material. The flexible catching device 53 may be an integral part of other flexible portions 54 of the teat cups. As can be seen from Figure 6, the funnel-shaped catching device 53 has interconnected annular portions 55 of different diameters. Thus, the shape of the flexible catching device can be easily adapted to the shape of the udder near the relevant teat.

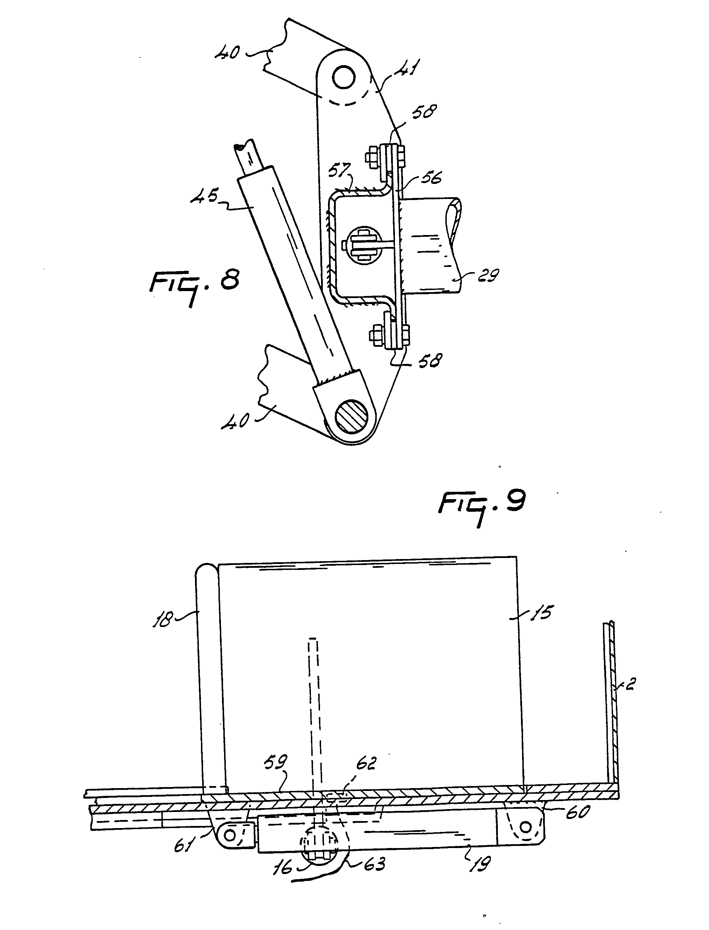

Figure 8 shows a further detail of the mode in which the supporting element 41 is connected to supporting arm 29. This Figure shows that supporting arm 29 has a flange 56. A profiled beam 57 which is guided capable of movement in guide members 58 connected to the flange 56 is connected to supporting element 41. Operating cylinder 44 has one end connected to flange 56 and the other end to the supporting element 41, so that loading the cylinder causes the supporting element 41 to shift relative to the supporting arm 29.

Figure 9 illustrates a further detail of Figure 4. The flaps 15 and 18 are shown in their upward positions. Both flaps are fastened to the moving portion 59 of the milking parlour floor, which portion is laterally movable by means of hydraulic or pneumatic operating cylinder 19, which has one end connected to a support 60 fastened to the fixed portion of the milking parlour floor and the other end to the support 61 fastened to the movable portion 59 of the floor. Figure 9 also shows the operating cylinder 16 for operating the flap 15. A sensor 62 is provided in the movable portion 59 of the floor so as to make it possible to observe whether the hind legs of the animal are at the desired place. For that purpose sensor 62 is connected by means of line 63 to an arrangement for recording the signal produced by sensor 62.

The implement operates as follows:

Before an animal, a cow in the example, enters the milking parlour, the milking cluster 65 is adjusted to its inoperative position and the U-shaped rod 21 is also in its raised position, so that the cow can pass under both elements. In addition, the guide plates 17, 18 which extend in the longitudinal direction of the milking parlour and substantially in the vertical direction, have been adjusted to the position shown in Figure 5, that is to say they are adjusted such that they are near to each other in the centre of the milking parlour. In addition, the flaps 14, 15 are in the substantially horizontal position and the flap 11 is in the upward direction. The exit door 6 is closed, so that the manger 5 is at the front of the milking parlour. When the cow enters the milking parlour it will advance as far to the front as possible in order to bring its head to the manger 5.

Doing so, the cow will automatically place its fore legs near the flap 11. Thereafter the flaps 14 and 15 are adjusted to the upward position and the U-shaped rod 21 is moved down. If a hind leg of the cow is positioned on a flap 14, 15, this leg will slide from the flap when the latter is adjusted to the upward position, and arrive in the desired place. After the flaps 14, 15 have been adjusted to the upward position and the U-shaped rod 21 bears on the posterior of the cow, the movable portions 59 of the floor move laterally. thus creating a space between the guide plates 17 and 18. As a result thereof, the hind legs of the animal are also moved apart. The sensors 62 can detect whether the two hind legs are in the appropriate place, whereafter the milking cluster can be connected. For that purpose it is determined by means of electronic means which cow is present in the milking parlour, for example by means of a collar provided around the cow's neck, comprising an information carrier or, as shown in the embodiment, one or more information carriers 48 which at the same time form part of the orientation means, and which are, for example, provided at the double skin of the cow near the hind legs.

Depending on the cow present in the milking parlour, the milking cluster is adjusted, that is to say the teat cups are positioned relative to each other.

The milking cluster moves from the inoperative position to the operative position by swivelling down of the U-shaped frame 27, the cover device 35 moving together with the milking cluster until the frame 34 of the cover device 35 bears against the stop 36. The milking cluster then moves further under the cow, between the guide plates 17 and 18. This causes the milking cluster 19 to be adjusted in a position under the udder of the cow, which position depends on the cow present in the milking parlour, whereafter the milking cluster is moved upwards until the teats are located in the teat cups.

It is alternatively possible for the travel of the milking cluster to the udder of the cow to be partially or fully determined by the orientation means which detect the position of the milking cluster relative to the udder. To that end the sensor 47 pulls-in signals produced by the orientation means 48, and in response to which the sensor 47 can determine its position relative to the orientation means 48. The milking cluster already adjusted for the relevant cow can for that purpose move in any direction, in the longitudinal direction of the milking parlour by means of swivelling of the U-shaped frame 27, in the lateral direction relative to the milking parlour by means of operating cylinder 44, and in the upward direction by means of operating cylinder 45. During the upward movement of the milking cluster the individual teat cups can move down by spring action, which will occur when the relevant catching device 53 is bearing against the cow's udder.

## Claims

1. An implement for milking animals, such as cows, comprising at least one milking parlour and at least one milking machine with a milking cluster (65), which milking parlour includes upwardly and longitudinally directed displacement means (17) for causing the animal to move at least one hind leg in the lateral direction, characterized in that the displacement means is fixed to a laterally movable portion (59) of the milking parlour floor (10).

2. An implement as claimed in claim 1, characterized in that the displacement means comprises at least one guide plate (17), which is laterally movable in opposite directions for forcing the animal to move at least one hind leg in lateral direction.

3. An implement as claimed in claim 2, characterized in that the parlour floor has two laterally movable parlour floor portions, on each of which a guide plate is fixed which parlour floor portions can move away from each other in lateral direction, whereby, when each of the hind legs of the animal is positioned on a laterally movable parlour floor portion, the hind legs are forced to move away from each other in lateral direction.

4. An implement as claimed in claim 3, characterized in that upwardly hinging flaps (14. 15) are provided, which are connected to the laterally movable parlour floor portions and which each constitute a stop for one of the hind legs.

5. An implement as claimed in any one of the preceding claims, characterized in that the milking parlour includes one or a plurality of sensors (62) which are arranged such that it can be detected whether legs of the animal are in a predetermined position.

6. An implement as claimed in claim 5, characterized in that the sensors (62) are provided on either side of the displacement means.

7. An implement as claimed in claim 6, characterized in that the sensors (62) are provided on the laterally movable parlour floor portions (59).

8. An implement as claimed in any one of the preceding claims, characterized in that the parlour floor has an upwardly hinging flap (11) before the animal's fore legs.

9. An implement as claimed in claim 2, characterized in that the guide plates (17, 18), moved away from each other in the lateral direction, form a space, through which the milking cluster (65) can be applied to the udder of the animal.

10. An implement as claimed in claim 9, characterized in that the milking cluster may be swivable around a substantially horizontal axis provided near the posterior of the animal.

## Patentansprüche

1. Vorrichtung zum Melken von Tieren, wie Kühen, mit mindestens einem Melkstand und mindestens einer Melkmaschine mit einem Melkgeschirr (65); der Melkstand hat eine aufwärts und längs gerichtete Verschiebeeinrichtung (17), um das Tier zu veranlassen, mindestens ein Hinterbein in Längsrichtung zu bewegen, dadurch gekennzeichnet, daß die Verschiebeeinrichtung an einem in Längsrichtung bewegbaren Teil (59) des Bodens des Melkstandes befestigt ist.

2. Vorrichtung nach Anspruch 1, dadurch gekennzeichnet, daß die Verschiebeeinrichtung mindestens eine Führungsplatte (17) aufweist, die in entgegengesetzten Richtungen längsbewegbar ist, um das Tier zum Bewegen mindestens eines Hinterbeines in Längsrichtung zu veranlassen.

3. Vorrichtung nach Anspruch 2, dadurch gekennzeichnet, daß der Melkstandboden zwei längsbewegliche Bodenteile aufweist, auf denen je eine Führungsplatte befestigt ist und die in Längsrichtung voneinander weg bewegbar sind, wobei die beiden jeweils auf einem der längsbeweglichen Melkstand-Bodenteile befindlichen Hinterbeine des Tieres in Längsrichtung voneinander weg bewegt werden.

4. Vorrichtung nach Anspruch 3, dadurch gekennzeichnet, daß aufwärts schwenkbare Klappen (14, 15) vorgesehen sind, die mit den längsbeweglichen Melkstand-Bodenteilen verbunden sind und je einen Anschlag für eines der Hinterbeine bilden.

5. Vorrichtung nach einem der vorhergehenden Ansprüche, dadurch gekennzeichnet, daß der Melkstand einen oder mehrere Fühler (62) aufweist, die derart angeordnet sind, daß erkennbar ist, ob sich die Beine des Tieres in einer bestimmten Position befinden.

6. Vorrichtung nach Anspruch 5, dadurch gekennzeichnet, daß die Fühler (62) beiderseits der Verschiebeeinrichtung vorgesehen sind.

7. Vorrichtung nach Anspruch 6, dadurch gekennzeichnet, daß die Fühler (62) auf den längsbeweglichen Melkstand-Bodenteilen (59) vorgesehen sind.

8. Vorrichtung nach einem der vorhergehenden Ansprüche, dadurch gekennzeichnet, daß der Melkstandboden eine vor den Vorderbeinen des Tieres befindliche, aufwärts schwenkbare Klappe (11) aufweist.

9. Vorrichtung nach Anspruch 2, dadurch gekennzeichnet, daß die Führungsplatten (17, 18) in ihrer in Längsrichtung auseinander bewegten Lage eine öffnung bilden, durch die hindurch das Melkgeschirr (65) an das Euter des Tieres angelegt werden kann.

10. Vorrichtung nach Anspruch 9, dadurch gekennzeichnet, daß das Melkgeschirr um eine im wesentlichen horizontale Achse schwenkbar ist, die nahe dem Hinterteil des Tieres vorgesehen ist.

**Revendications**

1. Installation pour traire des animaux tels que des vaches comprenant au moins une stalle de traite et au moins une machine à traire avec un groupe (65) de ventouses, laquelle stalle de traite comporte des moyens de déplacement (17) dirigés vers le haut et longitudinalement pour amener l'animal à déplacer latéralement au moins une patte postérieure, caractérisée en ce que le moyen de déplacement est fixé à une partie (59) mobile latéralement du plancher (10) de la stalle de traite.

2. Installation selon la revendication 1, caractérisée en ce que le moyen de déplacement comprend au moins une plaque de guidage (17) qui est mobile latéralement dans des directions opposées pour forcer l'animal à déplacer latéralement au moins une patte postérieure.

3. Installation selon la revendication 2, caractérisée en ce que le plancher de la stalle de traite a deux parties de son plancher mobiles latéralement, sur chacune desquelles est fixée une plaque de guidage, ces parties du plancher pouvant s'écarter l'une de l'autre dans le sens latéral, grâce à quoi, quand chacune des pattes postérieures de l'animal est positionnée sur une partie, mobile latéralement, du plancher de la stalle de traite, les pattes postérieures sont forcées à s'écarter latéralement l'une de l'autre.

4. Installation selon la revendication 3, caractérisée en ce que sont prévus des volets (14, 15) pouvant pivoter vers le haut, qui sont reliés aux parties du plancher de la stalle mobiles latéralement et qui constituent chacun une butée pour une des pattes postérieures.

5. Installation selon l'une quelconque des revendications précédentes, caractérisée en ce que la stalle de traite comporte un ou plusieurs capteurs (62) agencés de manière à permettre de détecter si les pattes de l'animal sont dans une position prédéterminée.

6. Installation selon la revendication 5, caractérisée en ce que les capteurs (62) sont prévus sur chaque côté du moyen de déplacement.

7. Installation selon la revendication 6, caractérisée en ce que les capteurs (62) sont prévus sur les parties (59) mobiles latéralement du plancher de la stalle.

8. Installation selon l'une quelconque des revendications précédentes, caractérisée en ce que la plancher de la stalle a un volet (11) pouvant pivoter vers le haut, en avant des pattes antérieures de l'animal.

9. Installation selon la revendication 2, caractérisée en ce que les plaques de guidage (17, 18) forment, en étant écartées latéralement l'une de l'autre, un espace à travers lequel le groupe (65) de ventouses peut être appliqué au pis de l'animal.

10. Installation selon la revendication 9, caractérisée en ce que le groupe de ventouses peut être pivotant autour d'un axe sensiblement horizontal prévu près du postérieur de l'animal.

FIG.1

1

EP  0 194 729  B1

Fig. 2

2

FIG. 3

FIG.4

FIG.5

EP 0 194 729 B1

Fig. 6

FIG. 7

FIG. 8

FIG. 9

7